(19) Europäisches Patentamt
European Patent Office
Office européen des brevets

(11) **EP 2 018 712 B1**

(12) **EUROPEAN PATENT SPECIFICATION**

(45) Date of publication and mention of the grant of the patent:
**11.02.2015 Bulletin 2015/07**

(21) Application number: **06733313.8**

(22) Date of filing: **18.04.2006**

(51) Int Cl.:
*H04W 52/34* (2009.01)　　*H04W 72/12* (2009.01)

(86) International application number:
**PCT/SE2006/000457**

(87) International publication number:
**WO 2007/120085 (25.10.2007 Gazette 2007/43)**

(54) **TRAFFIC LOAD DEPENDENT POWER ALLOCATION IN MULTI USER WIRELESS COMMUNICATION NETWORK WITH PROPORTIONAL FAIR SCHEDULING IN TIME AND FREQUENCY DOMAIN**

VERKEHRSLASTABHÄNGIGE LEISTUNGSZUTEILUNG IN EINEM DRAHTLOSEN MEHRBENUTZER-KOMMUNIKATIONSNETZ MIT PROPORTIONALER FAIRER EINTEILUNG IM ZEIT- UND FREQUENZBEREICH

ATTRIBUTION DE PUISSANCE DÉPENDANT DE LA CHARGE DE TRAFIC DANS UN RÉSEAU DE COMMUNICATION SANS FIL MULTI-UTILISATEUR AVEC UNE PROGAMMATION ÉQUITABLE PROPORTIONELLE DANS LE DOMAINE TEMPOREL ET DE FRÉQUENCE

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**28.01.2009 Bulletin 2009/05**

(73) Proprietor: **Telefonaktiebolaget L M Ericsson (publ)**
**164 83 Stockholm (SE)**

(72) Inventors:
- LIAO, Jingyi
  **Beijing 10000 (CN)**
- WAN, Lei
  **Beijing 100083 (CN)**

(74) Representative: **Kühn, Friedrich Heinrich et al**
**Ericsson AB**
**Patent Unit LTE**
**Torshamnsgatan 23**
**164 80 Stockholm (SE)**

(56) References cited:
**WO-A1-00/38348　　WO-A1-02/085061**
**US-A1- 2002 077 111**

- **HANBYUL SEO ET AL: "A proportional-fair power allocation scheme for fair and efficient multiuser OFDM systems" GLOBAL TELECOMMUNICATIONS CONFERENCE, 2004. GLOBECOM '04. IEEE DALLAS, TX, USA 29 NOV.- 3 DEC., 2004, PISCATAWAY, NJ, USA,IEEE, PISCATAWAY, NJ, USA LNKD- DOI: 10.1109/GLOCOM.2004.1379067, vol. 6, 29 November 2004 (2004-11-29), pages 3737-3741, XP010758435 ISBN: 978-0-7803-8794-2**
- **ZUKANG S. ET AL.: 'Optimal power allocation in multiuser OFDM systems' IEEE GLOBAL TELECOMMUNICATIONS CONFERENCE, 2003. GLOBECOM '03 vol. 1, 01 December 2003 - 05 December 2003, pages 337 - 341, XP010677899 & DATABASE INSPEC [Online] Database accession no. (8044804)**
- **LI Y. ET AL.: 'An adaptive subcarrier, bit and power allocation algorithm for multicell OFDM systems' CANADIAN CONFERENCE ON ELECTRICAL AND COMPUTER ENGINEERING, 2003. IEEE CCECE 2003 vol. 3, 04 May 2003 - 07 May 2003, pages 1531 - 1534, XP010654097 & DATABASE INSPEC [Online] Database accession no. (7962045)**

- WENGERTER C. ET AL.: 'Fairness and throughput analysis for generalized proportional fair frequency scheduling in OFDMA' 2005 IEEE 61ST VEHICULAR TECHNOLOGY CONFERENCE, 2005. VTC 2005-SPRING vol. 3, 30 May 2005 - 01 June 2005, pages 1903 - 1907, XP010855756
- JIHO JANG ET AL: "Transmit power adaptation for multiuser OFDM systems", IEEE JOURNAL ON SELECTED AREAS IN COMMUNICATIONS, IEEE SERVICE CENTER, PISCATAWAY, US, vol. 21, no. 2, 1 February 2003 (2003-02-01), pages 171-178, XP003014253, ISSN: 0733-8716, DOI: 10.1109/JSAC.2002.807348

**Description**

Technical Field

The present invention relates to a communication method and apparatus, and in particular to a scheduling method for multi-user wireless communication networks.

Background and Prior Art

Multi-user wireless communication networks are being used to an increasing degree and offer an increasing number of services. Such networks include Orthogonal Frequency Division Multiplex (OFDM) and Orthogonal Frequency Division Multiple Access (OFDMA) systems.

An important function in all multi-user wireless communication networks is the allocation of resources to different users in the network. Ideally, this should be achieved in such a way that each user gets a fair share of the network resources depending on the type of service requested, the type of subscription and other parameters.

An important type of multi-user wireless communication networks is Orthogonal Frequency Division Multiplex (OFDM) based communication systems. In multi-user OFDM a number of users share one symbol to provide multiple access. In OFDM systems the available transmission bandwidth is divided into a set of narrowband subcarriers. A set of neighbouring subcarriers, which is the minimum allocated radio resource, is often referred to as a chunk. In a multi-user OFDM system, known as Orthogonal Frequency Division Multiple Access (OFDMA) different subcarriers can be allocated to different users so as to provide a flexible multi-user access scheme. To improve the efficiency adaptive resource allocation techniques are used. In the adaptive OFDM downlink, packet data streams to a number of active users are multiplexed on a common bandwidth. Each user must estimate and (or) report the signal to interference and interference ratio (SINR) for its potentially used spectrum. A radio resource management module then allocates time-frequency resource and power based on the requirements and channel qualities of each user.

Several techniques have been proposed for exploiting the high degree of flexibility of radio resource management in OFDM by allocating resources between the users in the OFDM network in a fair manner. Data rate adaptation over all the subcarriers or a chunk, for example dynamic subcarrier/chunk assignment and adaptive power allocation can be employed.

US patent 6 807 426 proposes a fair scheduling scheme to apply a variety of combinations of channel condition metrics and user fairness metrics which has been used for WCDMA systems. A sequential scheduler is proposed, that is, first one user selects its active subcarriers/chunks and then the other users can select among the ones that are left. The sequential scheduler is complicated and rather slow. Users can be divided into classes to assign different priorities to users.

US patent 6 947 748 proposes subcarrier/chunk selection in which each of multiple subscribers measure channel and interference information for subcarriers based on pilot symbols received from a base station. The base station allocates subcarriers to each subscriber based on the channel and interference information. This allocation scheme has not taken fairness and coverage performance into consideration.

Other studies focus on joint subcarrier/chunk allocation and power allocation in which, typically, subchannel allocation is first performed by assuming an equal power distribution, then an optimal power allocation algorithm is applied in order to maximize the sum capacity while maintaining proportional fairness. Such systems are proposed in, for example, Zukan Shen, Andrews, J.G.; Evans, B.L. "Optimal power allocation in multiuser OFDM systems", GLOBECOM '03 IEEE, Dec. 2003 and Guocong Song and Ye (Geoffreyl Li, "Adaptive subcarrier and power allocation in OFDM based on maximizing utility", Vehicular Technology Conference, 2003. VTC 2003-Spring. The 57th IEEE Semi-annual, Volume 2, 22-25 April 2003.

The paper "A Proportional-Fair Power Allocation Scheme for Fair and Efficient Multiuser OFDM Systems" by Hanbul Seo and Byeong Gi Lee (IEEE Communications Society, Globecom 2004) discloses an algorithm called proportional-fair power allocation, designed to allocate transmission power in such a way that the resulting relative throughput-increment is identical for all subcarriers.

The frequency domain adaptation methods outlined above are subject to constraints on total power, bit error rate and proportionality among user data rates.

From a point of view of diversity the multi-user diversity and frequency diversity results from adaptive subcarrier/chunk allocation. Besides, adaptive power allocation in the frequency domain can also enhance system performance by means of frequency diversity. The subcarrier/chunk allocation and power control schemes currently used or proposed have the following

Object of the Invention

It is an object of the invention to provide a joint scheduling and power allocation scheme for OFDM systems which takes both traffic load and system performance into consideration.

Summary of the Invention

This object is achieved according to the present invention by a control unit for use in a multi-user wireless communications network such as an OFDM based communication system, said control unit comprising a processor and a computer program, for controlling resource allocation in the network, said control unit being characterized in that it is arranged to perform resource allocation in the network according to the following:

-   performing a proportional fair scheduling in time and frequency domain based on the bitrate for each user and the channel quality measurements for each chunk per user; and
-   performing a power allocation in the following way:

    ∘ if the traffic load is above a threshold: adopting a fixed power allocation regardless of the channel condition of each channel, wherein the power is allocated to all subcarriers uniformly; and
    ∘ if the traffic load is below the threshold, adopting a channel-dependent power allocation scheme.

The object is also achieved by a method of allocating resources in multi-user wireless communications network such as an OFDM based communication system, performing the following steps:

-   performing a proportional fair scheduling in time and frequency domain based on the bitrate for each user and the channel quality measurements for each chunk per user; and
-   performing a power allocation in the following way:

    ∘ if the traffic load is above a threshold: adopting a fixed power allocation regardless of the channel condition of each channel, wherein the power is allocated to all subcarriers uniformly; and
    ∘ if the traffic load is below the threshold, adopting a channel-dependent power allocation scheme.

The object is further achieved by a computer program product comprising computer-readable code means, which, when run in a processor in multi-user wireless communications network such as an OFDM based communication system causes the processor to control the resource allocation in the multi-user communications network by

-   performing a proportional fair scheduling in time and frequency domain based on the bitrate for each user and the channel quality measurements for each chunk per user; and
-   performing a power allocation in the following way:

    ∘ if the traffic load is above a threshold: adopting a fixed power allocation regardless of the channel condition of each channel, wherein the power is allocated to all subcarriers uniformly; and
    ∘ if the traffic load is below the threshold, adopting a channel-dependent power allocation scheme.

In the control unit, the method and the computer program product according to the invention, the purpose of the channel-dependent power allocation is to allocate the power among different chunks. In a multiple-antenna system, the channel-dependent power allocation can also allocate the power among different streams in spatial-domain.
The channel-dependent power allocation scheme may be, for example, an on/off power allocation scheme as the channel-dependent power allocation scheme, or a water-filling based algorithm as the channel-dependent power allocation scheme.
The load-switched frequency domain processing according to the invention includes a serialized frequency domain processing, which provides good performance in capacity, coverage and fairness, and which reduces computation complexity especially for heavy traffic loads, without losing system performance.
The proportional fair scheduling in both the time and the frequency domain (PFTF) is an extension of the proportional fair (PF) scheduling in the frequency domain. The PFTF scheduler maintains resource fairness by providing a fair sharing of transmission time on each chunk proportional to the past throughputs of each user individually, over a fixed window length. At the same time the chunk-wise independent scheduler used according to the invention is less complicated than the sequential frequency-domain scheduler. The main difference between the PFTF and the PF proposed in US 6 807 426 is that PF is done per OFDM frame with the same granularity of throughput measurement whereas PFTF treats the chunks as independent series scheduling units but update throughput measurement per OFDM frames. If $T_k(n)$ is taken as a common value for all users the PFTF could be the maximum SNR scheduling scheme.

The traffic load based power control according to the invention will reduce computation complexity, especially in cases of heavy traffic load.

Brief Description of the Drawings

The invention will be described in more detail in the following, by way of example and with reference to the appended drawings in which:

Figure 1 is an overview of a wireless communication network in which the invention may be employed,
Figure 2 is a flow chart of the method according to the invention,
Figures 3a and 3b show results of simulations of the inventive method

Detailed Description of Embodiments

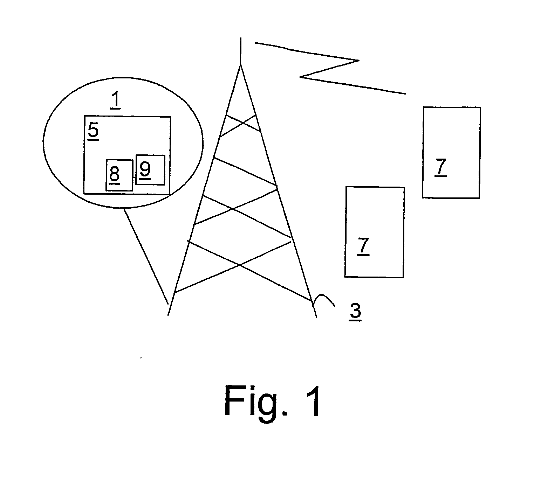

Figure 1 shows a cellular telecommunications network 1 in which the principles of the present invention may be applied. A base station 3 communicating with on or more control units 5 in the network also communicates with a number of user terminals 7 in the cell through a wireless interface. A main problem in cellular communications networks is how to achieve a fair distribution of resources between all the users 7 in the network. The control unit 5 comprises a processor 8 and a memory 9 holding computer software for controlling the resource allocation according to the invention, as will be discussed in the following.

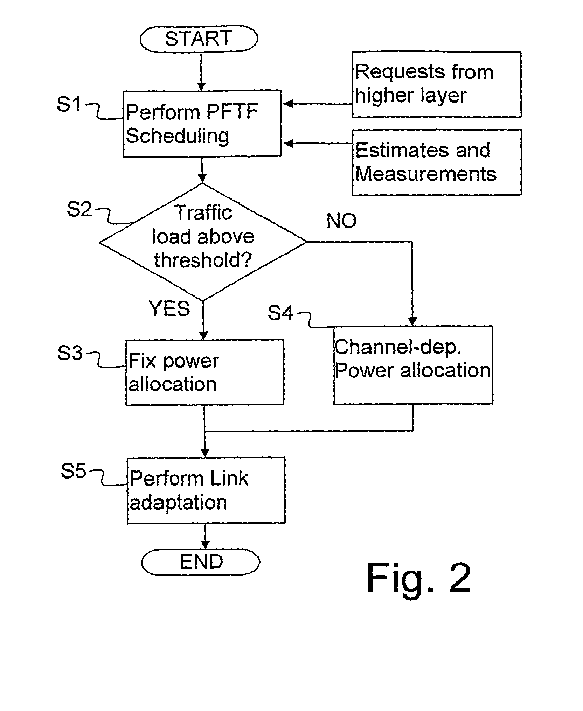

Figure 2 is a flow chart of the method according to the invention. In step S1 a PFTF scheduling is performed as will be discussed in more detail below. Step S2 is a decision step in which it is determined if the traffic load is above or below a threshold. The threshold could be the number of active users' (or offer calls') in one frame (or TTI), where the active users are allocated to different radio resources in the frequency domain. The number is pre-defmed for different scenarios. Alternatively, it could be the CQI threshold, or its related mutual information or throughput. If the threshold is only the number, the threshold computation complexity is only O(1). If another threshold, such as CQI threshold, is used, the computation becomes more complex, O (M), where M is the total available frequency chunks. The threshold may be calculated by the control unit or may be predefined and stored in a memory, for example the memory 9.

If the traffic load is above the threshold, in step S3, a fixed power allocation is adopted regardless of the channel's condition, which allocates the total power among all subcarriers uniformly. If the traffic load is below the threshold, in step S4 a channel-dependent power allocation scheme is applied to all the active users in order to increase the frequency diversity gain. The channel-dependent power allocation scheme could be set on or off for each chunk as will be discussed in more detail below. From each of step S3 and S4 the procedure continues with step S5.

In step S5 link adaptation is worked for data related to each user. The link adaptation includes selection of Modulation and Coding Scheme (MCS) and other functions.

The PFTF scheduling performed in step S1 requires two inputs. One is the correctly transmitted bit-rate for each user, updated per frame. The other one is the channel quality measurements per chunk for each user. Compared to the traditional PF scheduler more dense channel quality measurements are required. PFTF implements the multi-user scheduler chunk-by-chunk, which means that the decision for each chunk is independent of the other chunks, in contrast to the sequential frequency-domain scheduler.

The proportional fair scheduling in both time and frequency domain (PFTF) applied according to the invention is an extension of proportional fair scheduling in the frequency domain. The PFTF scheduler maintains resource fairness according to a fair metric of information transmission capability estimation of the link between the access-point and each user in proportion to the past throughputs of users over a fixed window length. The information transmission capability is estimated based on the channel quality (CQ) feedback from each user, while the past throughput per user can be collected either in the access-point or in the UE. On the time-frequency resource forward link transmission, at each time-frequency chunk $n$ for time slot k, the control unit 5 obtains a parameter Ri,k(n) which may be requested data rate or one or more other estimated parameters, for example estimated SNR or delay, on chunk $n$ for user $i$, which is supportable by its current channel quality. Assuming an instantaneous and error-free information feedback for slot k, the scheduler assigns the time-frequency chunk $n$ to the user $i$, which has the largest ratio

$$\frac{R_{i,k}(n)}{T_k(n)}$$

where $T_k(n)$ is average throughput or other measured parameter of chunk n for user number k in a past window.

Load switched power allocation is performed as follows: If the traffic load is above a threshold a fixed power allocation is adopted regardless of the channel condition of each channel. The power is allocated to all subcarriers uniformly. The fixed power allocation has the smallest computation complexity O(1). If the traffic load is lower than the threshold a channel-dependent power allocation scheme is adopted in order to increase the frequency diversity gain. The basic principle is based on the fact that both channel-dependent scheduling and power allocation can be used to achieve multi-user diversity and frequency diversity gain for the system. Therefore, if sufficient multi-user diversity gain has already been achieved by scheduling, only a small improvement can be achieved by power allocation. Since the improvement that can be achieved by power allocation is very small, power allocation is preferably not used in this case. The frequency domain scheduling (for example, PFTF) achieves a better performance if more users are scheduled at the same time since this enables more diversity gain.

The power allocation scheme according to the invention could be channel dependent or channel independent. Channel independent power allocation scheme could be to allocate equal power to all chunks. Channel dependent power allocation schemes desire to achieve better performance, for example, better capacity, based on the known channel information and the quality model.

A channel dependent power allocation scheme that could be used is multi-user on/off power allocation, where the chunks set "on" per user have the same flat power distribution. Multi-user on/off power allocation includes two steps: First a power $P_i$ is allocated to each user $i$, assuming $M$ is the total number of available frequency chunks and $M_i$ is the allocated chunks to user $i$ after PFTF scheduling. This can be expressed as

$$P_i = \frac{M_i}{M} P_{total}$$

Secondly, the power $P_i$ is allocated to the used chunk $n$ of user $i$ to obtain the maximum throughput for user $i$. $f(\cdot)$ is a mapping function of SNR to throughput that is, to obtain the maximum throughput for user $i$ the power $P_i$ is allocated to all the selected chunks of user I by means of an on/off scheme.

$$\arg\max_{Y_i \subseteq Y_I} \sum_{,n \in Y'_I} (R_i(n)) = \arg\max_{Y_i \subseteq Y_I} \sum_{,n \in Y'_i} f(g_i(n) \cdot P_i(n))$$

which is to select "on" chunks based on estimated SNR $g_i(n)$ information, where $Y_i$ is the chunk set used by user $i$. The final selected "on" chunks set $Y'_i \subseteq Y_i$.

$$P_i(n) = \begin{cases} \dfrac{P_{user\_i}}{M_i^{on}} & chunk\ n\ 'on',\ n \in Y'_i \\ 0 & 'off' \end{cases}$$

Other power allocation schemes could also be used, for example, the water-filling based scheme described in Zukan Shen, Andrews, J.G.; Evans, B.L. "Optimal power allocation in multiuser OFDM systems", GLOBECOM '03 IEEE, Dec. 2003. The water-filling method, like the on/of power allocation mentioned above, is also based on channel information to perform optimal or suboptimal power allocation to achieve a good capacity gain. The water-filling method could achieve the best performance with Shannon capacity, but not for real modulation systems, since there is a mutual information gap between the Shannon capacity and the capacity for real modulation (for example QPSK, 16QAM).

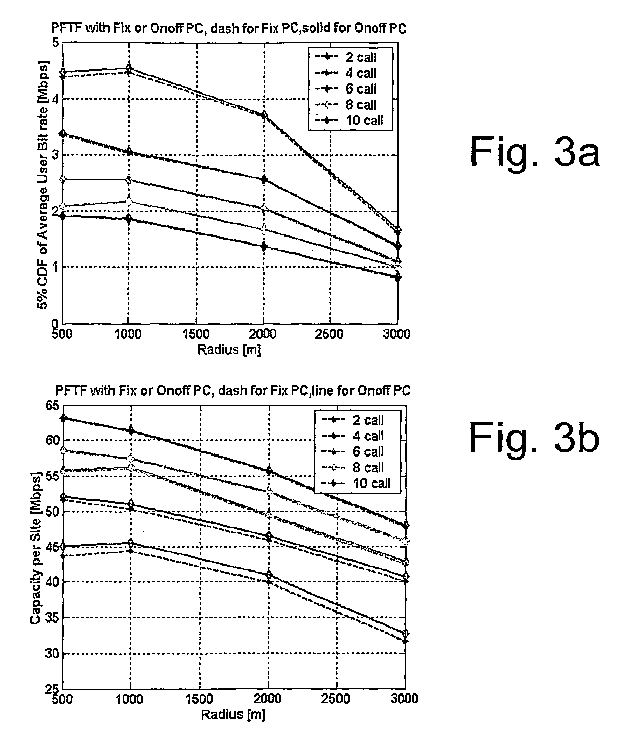

Figures 3a and 3b show results of a simulation of the inventive method performed with the following assumptions:

- a power of 80 W is allocated for 20MHz
- full buffer traffic
- continuous coding rate adaptation
- a single transmitter and receiver antenna
- the same MCS for the same user to an OFDM frame.

In Figures 3a and 3b the results for PFTF with fix power control are shown as dashed lines and the results for on/off power control are shown as solid lines. From top to bottom in the curves the pairs of lines represent the results for 2, 4, 6, 8 and 10 calls, respectively.

Fig. 3a shows PFTF with fix power control and on/off power control, for 2, 4, 6, 8 and 10 calls, respectively. The x axis represents the radius, ranging from 500 meters to 3000 meters, and the y axis represents 5% CDF of average user (at the cell edge) bit rate in Mb/s. In Figure 3b, the x axis represents the radius, ranging from 500 meters to 3000 meters, and the y axis represents the capacity per site in Mb/s. As can be seen, on/off power allocation is preferable for use together with PFTF when the number of offered calls is small. For example, comparing the cell throughput at a cell radius of 2000 meters, on/of power control has about 4% gain over fix power control. As the number of offered calls increases the additional gain of using on/off power allocation compared to fix power allocation is reduced. Therefore, it may be advantageous to use fix power allocation together with PFTF to reduce computation complexity.

**Claims**

1. A control unit (5) for use in an Orthogonal Frequency Division Multiplex, OFDM, based communication system (1), said control unit (5) comprising a processor (8) and a computer program (9), for controlling resource allocation in the network, said control unit being **characterized in that** it is arranged to perform resource allocation in the network (1) according to the following:

   - performing (s1) a proportional fair scheduling in time and frequency domain based on the correctly transmitted bitrate for each user updated per frame and the channel quality measurements for each chunk per user; and
   - performing a power allocation in the following way:

     if the traffic load is above a threshold: adopting (s2, s3) a fixed power allocation regardless of the channel condition of each channel, wherein the power is allocated to all subcarriers uniformly; and
     if the traffic load is below the threshold, adopting (s2, s4) a channel-dependent power allocation scheme.

2. A control unit according to claim 1, arranged to determine the threshold for a given situation.

3. A control unit according to claim 1, arranged to obtain the threshold from a memory unit (9).

4. A control unit according to claim 1 or 2, arranged to determine the threshold based on the CQI threshold, or its related mutual information or throughput.

5. A control unit according to any one of the preceding claims, arranged to assign to a first user a time-frequency chunk n having the largest ratio

$$\frac{R_{i,k}(n)}{T_k(n)}$$

where $T_k(n)$ is average throughput or other measured parameter of chunk n for user number k in a past window.

6. A control unit according to any one of the preceding claims, arranged to use an on/off power allocation scheme as the channel-dependent power allocation scheme.

7. A control unit according to any one of the preceding claims, arranged to use a water-filling based algorithm as the channel-dependent power allocation scheme.

8. A method of allocating resources in an Orthogonal Frequency Division Multiplex, OFDM, based communication system, comprising the following steps:

- performing (s1) a proportional fair scheduling in time and frequency domain based on the correctly transmitted bitrate for each user updated per frame and the channel quality measurements for each chunk per user; and
- performing a power allocation in the following way:

if the traffic load is above a threshold: adopting (s2, s3) a fixed power allocation regardless of the channel condition of each channel, wherein the power is allocated to all subcarriers uniformly; and
if the traffic load is below the threshold, adopting (s2, s4) a channel-dependent power allocation scheme.

9. A method according to claim 8, further comprising the step of determining the threshold based on the number of active users served in frequency domain.

10. A method according to claim 8, further comprising the step of determining the threshold based on the CQI threshold, or its related mutual information or throughput.

11. A method according to claim 8, further comprising obtaining the threshold value from a memory.

12. A method according to any one of the claims 8-10, comprising the step of assigning to a first user a time-frequency chunk n having the largest ratio

$$\frac{R_{i,k}(n)}{T_k(n)}$$

where $T_k(n)$ is average throughput or other measured parameter of chunk n for user number k in a past window.

13. A method according to any one of the claims 8-11, wherein the channel-dependent power allocation scheme is an on/off power allocation scheme.

14. A method according to any one of the preceding claims, wherein the channel-dependent power allocation scheme is a water-filling based algorithm.

15. A computer program product (9) comprising computer-readable code means, which, when run in a processor (8) in an Orthogonal Frequency Division Multiplex, OFDM, based communication system (1) causes the processor to control the resource allocation in the multi-user communications network by

- performing (s1) a proportional fair scheduling in time and frequency domain based on the correctly transmitted bitrate for each user updated per frame and the channel quality measurements for each chunk per user; and
- performing a power allocation in the following way:

if the traffic load is above a threshold: adopting (s2, s3) a fixed power allocation regardless of the channel condition of each channel, wherein the power is allocated to all subcarriers uniformly; and
if the traffic load is below the threshold, adopting (s2, s4) a channel-dependent power allocation scheme.

16. A computer program product according to claim 15, arranged to determine the threshold based on the number of active users served in frequency domain.

17. A computer program product according to claim 15, arranged to determine the threshold based on the CQI threshold, or its related mutual information or throughput.

18. A computer program product according to any one of the claims 15-17, arranged to assign to a first user a time-frequency chunk n having the largest ratio

$$\frac{R_{i,k}(n)}{T_k(n)}$$

where $T_k(n)$ is average throughput or other measured parameter of chunk n for user number k in a past window.

19. A computer program product according to any one of the claims 15-18, arranged to use an on/off power allocation scheme as the channel-dependent power allocation scheme.

20. A computer program product according to any one of the claims 15-19, arranged to use a water-filling based algorithm as the channel-dependent power allocation scheme.

**Patentansprüche**

1. Steuereinheit (5) zur Verwendung in einem OFDM(orthogonaler Frequenzmultiplex)-basierten Kommunikationssystem (1), wobei die Steuereinheit (5) einen Prozessor (8) und ein Computerprogramm (9) umfasst, um Ressourcenzuweisung im Netz zu steuern, wobei die Steuereinheit **dadurch gekennzeichnet ist, dass** sie dazu angeordnet ist, Ressourcenzuweisung im Netz (1) gemäß dem Folgenden auszuführen:

   - Ausführen (s1) eines proportionalen fairen Schedulings in der Zeit- und Frequenzdomäne auf der Basis der korrekt übertragenen Bitrate für jeden Benutzer, pro Rahmen aktualisiert, und der Kanalqualitätsmessungen für jeden Chunk pro Benutzer; und
   - Ausführen einer Leistungszuweisung auf folgende Weise:

   falls die Verkehrslast über einer Schwelle liegt: eine feste Leistungszuweisung annehmen (s2, s3), ungeachtet des Kanalzustands eines jeden Kanals, worin die Leistung allen Unterträgern gleichmäßig zugewiesen wird; und
   falls die Verkehrslast unter der Schwelle liegt, ein kanalabhängiges Leistungszuweisungsschema annehmen (s2, s4).

2. Steuereinheit nach Anspruch 1, dazu angeordnet, die Schwelle für eine gegebene Situation zu bestimmen.

3. Steuereinheit nach Anspruch 1, dazu angeordnet, die Schwelle von einer Speichereinheit (9) zu ermitteln.

4. Steuereinheit nach Anspruch 1 oder 2, dazu angeordnet, die Schwelle auf der Basis der CQI(Kanalqualitätsanzeiger)-Schwelle oder ihrer zugehörigen gegenseitigen Information oder ihres zugehörigen gegenseitigen Durchsatzes zu bestimmen.

5. Steuereinheit nach einem der vorhergehenden Ansprüche, dazu angeordnet, einem ersten Benutzer einen Zeit-Frequenz-Chunk n mit dem größten Verhältnis

$$\frac{R_{i,k}(n)}{T_k(n)}$$

zuzuweisen, wo $T_k(n)$ der durchschnittliche Durchsatz oder ein anderer gemessener Parameter des Chunks $n$ für die Benutzerzahl $k$ in einem vorherigen Fenster ist.

6. Steuereinheit nach einem der vorhergehenden Ansprüche, dazu angeordnet, ein Ein/Aus-Leistungszuweisungsschema als das kanalabhängige Leistungszuweisungsschema zu verwenden.

7. Steuereinheit nach einem der vorhergehenden Ansprüche, dazu angeordnet, einen Wasserfüll-Algorithmus als das kanalabhängige Leistungszuweisungsschema zu verwenden.

8. Verfahren zum Zuweisen von Ressourcen in einem OFDM(orthogonaler Frequenzmultiplex)-basierten Kommunikationssystem, die folgenden Schritte umfassend:

- Ausführen (s1) eines proportionalen fairen Schedulings in der Zeit- und Frequenzdomäne auf der Basis der korrekt übertragenen Bitrate für jeden Benutzer, pro Rahmen aktualisiert, und der Kanalqualitätsmessungen für jeden Chunk pro Benutzer; und
- Ausführen einer Leistungszuweisung auf folgende Weise:

falls die Verkehrslast über einer Schwelle liegt: eine feste Leistungszuweisung annehmen (s2, s3), ungeachtet des Kanalzustands eines jeden Kanals, worin die Leistung allen Unterträgern gleichmäßig zugewiesen wird; und
falls die Verkehrslast unter der Schwelle liegt, ein kanalabhängiges Leistungszuweisungsschema annehmen (s2, s4).

9. Verfahren nach Anspruch 8, außerdem den Schritt umfassend, die Schwelle auf der Basis der Anzahl von aktiven Benutzern zu bestimmen, die in der Frequenzdomäne versorgt werden.

10. Verfahren nach Anspruch 8, außerdem den Schritt umfassend, die Schwelle auf der Basis der CQI-Schwelle oder ihrer zugehörigen wechselseitigen Information oder ihres zugehörigen wechselseitigen Durchsatzes zu bestimmen.

11. Verfahren nach Anspruch 8, außerdem umfassend, dass der Schwellenwert aus einem Speicher ermittelt wird.

12. Verfahren nach einem der Ansprüche 8-10, außerdem den Schritt umfassend, einem ersten Benutzer einen Zeit-Frequenz-Chunk *n* mit dem größten Verhältnis

$$\frac{R_{i,k}(n)}{T_k(n)}$$

zuzuweisen, wo $T_k(n)$ der durchschnittliche Durchsatz oder ein anderer gemessener Parameter des Chunks *n* für die Benutzerzahl *k* in einem vorherigen Fenster ist.

13. Verfahren nach einem der Ansprüche 8-11, worin das kanalabhängige Leistungszuweisungsschema ein Ein/Aus-Leistungszuweisungsschema ist.

14. Verfahren nach einem der vorhergehenden Ansprüche, worin das kanalabhängige Leistungszuweisungsschema ein Wasserfüll-Algorithmus ist.

15. Computerprogrammprodukt (9), ein computerlesbares Codemittel umfassend, das, wenn es auf einem Prozessor (8) in einem OFDM(orthogonaler Frequenzmultiplex)-basierten Kommunikationssystem (1) ausgeführt wird, den Prozessor veranlasst, die Ressourcenzuweisung im Mehrfachbenutzer-Kommunikationsnetz zu steuern durch

- Ausführen (s1) eines proportionalen fairen Schedulings in der Zeit- und Frequenzdomäne auf der Basis der korrekt übertragenen Bitrate für jeden Benutzer, pro Rahmen aktualisiert, und der Kanalqualitätsmessungen für jeden Chunk pro Benutzer; und
- Ausführen einer Leistungszuweisung auf folgende Weise:

falls die Verkehrslast über einer Schwelle liegt: eine feste Leistungszuweisung annehmen (s2, s3), ungeachtet des Kanalzustands eines jeden Kanals, worin die Leistung allen Unterträgern gleichmäßig zugewiesen wird; und
falls die Verkehrslast unter der Schwelle liegt, ein kanalabhängiges Leistungszuweisungsschema annehmen (s2, s4).

16. Computerprogrammprodukt nach Anspruch 15, dazu angeordnet, die Schwelle auf der Basis der Anzahl von aktiven Benutzern zu bestimmen, die in der Frequenzdomäne versorgt werden.

17. Computerprogrammprodukt nach Anspruch 15, dazu angeordnet, die Schwelle auf der Basis der CQI-Schwelle oder ihrer zugehörigen gegenseitigen Information oder ihres zugehörigen gegenseitigen Durchsatzes zu bestimmen.

**18.** Computerprogrammprodukt nach einem der Ansprüche 15-17, dazu angeordnet, einem ersten Benutzer einen Zeit-Frequenz-Chunk n mit dem größten Verhältnis

$$\frac{R_{i,k}(n)}{T_k(n)}$$

zuzuweisen, wo $T_k(n)$ der durchschnittliche Durchsatz oder ein anderer gemessener Parameter des Chunks *n* für die Benutzerzahl *k* in einem vorherigen Fenster ist.

**19.** Computerprogrammprodukt nach einem der Ansprüche 15-18, dazu angeordnet, ein Ein/Aus-Leistungszuweisungsschema als das kanalabhängige Leistungszuweisungsschema zu verwenden.

**20.** Computerprogrammprodukt nach einem der Ansprüche 15-19, dazu angeordnet, einen Wasserfüll-Algorithmus als das kanalabhängige Leistungszuweisungsschema zu verwenden.


**Revendications**

**1.** Unité de commande (5) destinée à être utilisée dans un système de communication à base de multiplexage par répartition orthogonale de la fréquence, OFDM (1), ladite unité de commande (5) comprenant un processeur (8) et un programme informatique (9), pour commander une affectation de ressources dans le réseau, ladite unité de commande étant **caractérisée en ce qu'**elle est agencée de manière à mettre en oeuvre une affectation de ressources dans le réseau (1) selon les étapes ci-dessous consistant à :

- mettre en oeuvre (s1) une planification équitable proportionnelle dans le domaine temporel et le domaine fréquentiel, sur la base du débit binaire correctement transmis pour chaque utilisateur mis à jour par trame et des mesures de qualité de canal pour chaque segment par utilisateur ; et
- mettre en oeuvre une affectation de puissance de la manière suivante :

si la charge de trafic est supérieure à un seuil : adopter (s2, s3) une affectation de puissance fixe, quelle que soit l'état de canal de chaque canal, dans lequel la puissance est affectée à toutes les sous-porteuses uniformément ; et
si la charge de trafic est inférieure au seuil, adopter (s2, s4) un schéma d'affectation de puissance dépendant du canal.

**2.** Unité de commande selon la revendication 1, agencée de manière à déterminer le seuil pour une situation donnée.

**3.** Unité de commande selon la revendication 1, agencée de manière à obtenir le seuil à partir d'une unité de mémoire (9).

**4.** Unité de commande selon la revendication 1 ou 2, agencée de manière à déterminer le seuil sur la base du seuil d'indicateur CQI, ou de ses informations mutuelles connexes ou de son débit mutuel connexe.

**5.** Unité de commande selon l'une quelconque des revendications précédentes, agencée de manière à affecter, à un premier utilisateur, un segment temps-fréquence n présentant le rapport le plus élevé :

$$\frac{R_{i,k}(n)}{T_k(n)}$$

où $T_k(n)$ correspond au débit moyen ou à un autre paramètre mesuré du segment n pour un nombre d'utilisateurs k dans une fenêtre antérieure.

**6.** Unité de commande selon l'une quelconque des revendications précédentes, agencée de manière à utiliser un schéma d'activation / désactivation d'affectation de puissance en tant que le schéma d'affectation de puissance dépendant du canal.

7. Unité de commande selon l'une quelconque des revendications précédentes, agencée de manière à utiliser un algorithme basé sur le remplissage d'eau en tant que le schéma d'affectation de puissance dépendant du canal.

8. Procédé d'affectation de ressources dans un système de communication à base de multiplexage par répartition orthogonale de la fréquence, OFDM, comprenant les étapes ci-dessous consistant à :

   - mettre en oeuvre (s1) une planification équitable proportionnelle dans le domaine temporel et le domaine fréquentiel, sur la base du débit binaire correctement transmis pour chaque utilisateur mis à jour par trame et des mesures de qualité de canal pour chaque segment par utilisateur ; et
   - mettre en oeuvre une affectation de puissance de la manière suivante :

      si la charge de trafic est supérieure à un seuil : adopter (s2, s3) une affectation de puissance fixe, quelle que soit l'état de canal de chaque canal, dans lequel la puissance est affectée à toutes les sous-porteuses uniformément ; et
      si la charge de trafic est inférieure au seuil, adopter (s2, s4) un schéma d'affectation de puissance dépendant du canal.

9. Procédé selon la revendication 8, comprenant en outre l'étape consistant à déterminer le seuil sur la base du nombre d'utilisateurs actifs desservis dans le domaine fréquentiel.

10. Procédé selon la revendication 8, comprenant en outre l'étape consistant à déterminer le seuil sur la base du seuil d'indicateur CQI, ou de ses informations mutuelles connexes ou de son débit mutuel connexe.

11. Procédé selon la revendication 8, comprenant en outre l'étape consistant à obtenir la valeur de seuil à partir d'une mémoire.

12. Procédé selon l'une quelconque des revendications 8 à 10, comprenant l'étape consistant à affecter, à un premier utilisateur, un segment temps-fréquence n présentant le rapport le plus élevé

$$\frac{R_{i,k}(n)}{T_k(n)}$$

où $T_k(n)$ correspond au débit moyen ou à un autre paramètre mesuré du segment n pour un nombre d'utilisateurs k dans une fenêtre antérieure.

13. Procédé selon l'une quelconque des revendications 8 à 11, dans lequel le schéma d'affectation de puissance dépendant du canal est un schéma d'activation / désactivation d'affectation de puissance.

14. Procédé selon l'une quelconque des revendications précédentes, dans lequel le schéma d'affectation de puissance dépendant du canal est un algorithme basé sur le remplissage d'eau.

15. Produit-programme informatique (9) comprenant un moyen de code lisible par ordinateur, qui, lorsqu'il est exécuté dans un processeur (8) au sein d'un système de communication à base de multiplexage par répartition orthogonale de la fréquence, OFDM (1), amène le processeur à commander l'affectation de ressources dans le réseau de communication multiutilisateur par

   - la mise en oeuvre (s1) d'une planification équitable proportionnelle dans le domaine temporel et le domaine fréquentiel, sur la base du débit binaire correctement transmis pour chaque utilisateur mis à jour par trame et des mesures de qualité de canal pour chaque segment par utilisateur ; et
   - la mise en oeuvre d'une affectation de puissance de la manière suivante :

      si la charge de trafic est supérieure à un seuil : adopter (s2, s3) une affectation de puissance fixe, quelle que soit l'état de canal de chaque canal, dans lequel la puissance est affectée à toutes les sous-porteuses uniformément ; et
      si la charge de trafic est inférieure au seuil, adopter (s2, s4) un schéma d'affectation de puissance dépendant du canal.

**16.** Produit-programme informatique selon la revendication 15, agencé de manière à déterminer le seuil sur la base du nombre d'utilisateurs actifs desservis dans le domaine fréquentiel.

**17.** Produit-programme informatique selon la revendication 15, agencé de manière à déterminer le seuil sur la base du seuil d'indicateur CQI, ou de ses informations mutuelles connexes ou de son débit mutuel connexe.

**18.** Produit-programme informatique selon l'une quelconque des revendications 15 à 17, agencé de manière à affecter, à un premier utilisateur, un segment temps-fréquence n présentant le rapport le plus élevé

$$\frac{R_{i,k}(n)}{T_k(n)}$$

où $T_k(n)$ correspond au débit moyen ou à un autre paramètre mesuré du segment n pour un nombre d'utilisateurs k dans une fenêtre antérieure.

**19.** Produit-programme informatique selon l'une quelconque des revendications 15 à 18, agencé de manière à utiliser un schéma d'activation / désactivation d'affectation de puissance en tant que le schéma d'affectation de puissance dépendant du canal.

**20.** Produit-programme informatique selon l'une quelconque des revendications 15 à 19, agencé de manière à utiliser un algorithme basé sur le remplissage d'eau en tant que le schéma d'affectation de puissance dépendant du canal.

Fig. 1

START

Requests from higher layer

S1 — Perform PFTF Scheduling

Estimates and Measurements

S2 — Traffic load above threshold?

NO

YES

S4 — Channel-dep. Power allocation

S3 — Fix power allocation

S5 — Perform Link adaptation

END

Fig. 2

Fig. 3a

Fig. 3b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6807426 B

- US 6947748 B

### Non-patent literature cited in the description

- **ZUKAN SHEN, ANDREWS, J.G ; EVANS, B.L.** Optimal power allocation in multiuser OFDM systems. *GLOBECOM '03 IEEE,* December 2003
- Adaptive subcarrier and power allocation in OFDM based on maximizing utility. **GEOFFREYI LI.** Vehicular Technology Conference. VTC 2003-Spring, 22 April 2003, vol. 2

- **HANBUL SEO ; BYEONG GI LEE.** A Proportional-Fair Power Allocation Scheme for Fair and Efficient Multiuser OFDM Systems. *IEEE Communications Society,* 2004
- **ZUKAN SHEN ; ANDREWS, J.G. ; EVANS, B.L.** Optimal power allocation in multiuser OFDM systems. *GLOBECOM '03 IEEE,* December 2003